# EUROPÄISCHE PATENTSCHRIFT

(11) **EP 0 501 948 B1**
(45) Veröffentlichungstag und Bekanntmachung des Hinweises auf die Patenterteilung: **27.03.1996**
(21) Anmeldenummer: 92890048.9
(22) Anmeldetag: 28.02.1992
(51) Int. Cl.: G01B 3/10, G01B 5/02

(54) **Vorrichtung zum Messen von Längenänderungen einer Messstrecke**
Device to measure changes in length of a measuring range
Dispositif pour mesurer des changements en longueur d'une distance de mesure

(30) Priorität: 01.03.1991 US 663101
(43) Veröffentlichungstag der Anmeldung: 02.09.1992
(73) Patentinhaber: FEINMECHANISCHE OPTISCHE BETRIEBSGESELLSCHAFT m.b.H., A-5020 Salzburg (AT)
(72) Erfinder: Hesske, Benno, Dr., A-5020 Salzburg (AT); Andrae, Franz, Dr., A-3150 Wilhelmsburg (AT); Weber, Franz Peter, A-5034 Salzburg-Morzg (AT)
(74) Vertreter: Hübscher, Gerhard, Dipl.-Ing.

(56) Entgegenhaltungen:
- US-A- 1 978 682
- US-A- 2 609 610
- SOVIET PATENTS ABSTRACTS Section EI, Week 8323, Derwent Publications Ltd., London, GB; Class S, AN 83-H7369K & SU-A-947 619
- SOVIET PATENTS ABSTRACTS Section EI, Week 8944, Derwent Publications Ltd., London, GB; Class S, AN 89-322899 & SU-A-1 455 227

## Beschreibung

Die Erfindung bezieht sich auf eine Vorrichtung zum Messen von Längenänderungen einer Meßstrecke mit Hilfe eines entlang der Meßstrecke gespannten Meßbandes, das gegenüber einem Meßstreckenende verschiebefest gehalten wird und am anderen Meßstreckenende mit einer eine Längenmeßskala und eine Ablesemarke gegebenenfalls in Form eines Nonius aufweisenden Meßeinrichtung verbunden ist. Eine solche Vorrichtung ist beispielsweise aus US-A-2 609 610 bekannt.

Um Querschnittsänderungen von Baumstämmen in der Forstwirtschaft erfassen zu können, ist es bekannt, den Stammumfang in einer bestimmten Höhe mit Hilfe eines um den Baumstamm gelegten Meßbandes in vorgegebenen Überwachungszeitspannen zu messen, so daß aus der Differenz der Meßergebnisse die Zuwächse oder Schrumpfungen bezüglich eines Stammquerschnittes bestimmt werden können. Nachteilig bei diesen einfachen Messungen ist allerdings, daß die mit einem zeitlichen Abstand voneinander vorgenommenen Messungen sich im allgemeinen nicht auf denselben Stammquerschnitt beziehen können, so daß solche Messungen mit Meßfehlern behaftet sind, die von der Geschicklichkeit des Messenden abhängen. Um eine solche Abhängigkeit zu vermeiden, werden Meßbänder eingesetzt, die einander überlappend um den zu messenden Baumstamm gelegt und durch eine zwischen den einander überlappenden Enden eingehängte Feder gespannt werden. Da diese Meßbänder am Baumstamm verbleiben können, bleibt die Zuordnung der Umfangsmessung auf einen Stammquerschnitt weitgehend erhalten. Nachteilig ist jedoch, daß die Feder unmittelbar an dem Meßband angreift, und sich zusätzlich an die einander überlappenden Bandenden anlegt, was bei Messungen über längere Beobachtungszeiträume zu stark schwankenden Zugspannungen der Meßbänder und damit wieder zu Meßfehlern führen kann.

Der Erfindung liegt somit die Aufgabe zugrunde, eine Vorrichtung zum Messen von Längenänderungen einer Meßstrecke der eingangs geschilderten Art mit einfachen Mitteln so zu verbessern, daß eine hohe Meßgenauigkeit auch über längere Beobachtungszeiträume sichergestellt werden kann.

Die Erfindung löst die gestellte Aufgabe gemäß Anspruch 1, insbesondere also dadurch, daß die Meßeinrichtung aus einer Wickelrolle für das Meßband und aus einer dem Meßstreckenende gegenüber unverschiebbar abgestützten Lagerkonsole für die Wickelrolle besteht, die durch ein Drehmoment im Aufwickelsinn des Meßbandes belastet ist, und daß die Längenmeßskala und die Ablesemarke einerseits der Wickelrolle und anderseits der Lagerkonsole zugeordnet sind.

Durch das Vorsehen einer im Aufwickelsinn des Meßbandes mit einem Drehmoment belasteten Wickelrolle für das eine Ende des Meßbandes kann in vorteilhafter Weise eine weitgehend gleichbleibende Zugbelastung für das entlang der Meßstrecke gespannte Meßband sichergestellt werden, weil keine Reibung zwischen einander überlappenden Endes des Meßbandes zu berücksichtigen ist. Über die drehmomentbelastete Wickelrolle kann außerdem eine über die Bandbreite gleichmäßige Zugspannung auf das Meßband ausgeübt werden, was besonders vorteilhafte Voraussetzungen für eine genaue Messung von Längenänderungen entlang der Meßstrecke darstellt. Dazu kommt noch, daß durch die Anordnung der Längenmeßskala und der Ablesemarke einerseits auf der Wickelrolle und anderseits auf der Lagerkonsole gute Ablesebedingungen erreicht werden können, unabhängig davon, ob die Änderung einer Umfangslänge oder einer Abstandslänge zwischen zwei Meßpunkten erfaßt werden soll.

Voraussetzung für eine genaue Messung ist allerdings, daß das Meßband zugfest mit der Wickelrolle verbunden werden kann. Wird zu diesem Zweck die Wickelrolle mit einem das Meßband an den Rollenmantel andrückenden Klemmeinrichtung versehen, so ergibt sich der zusätzliche Vorteil, daß das Meßband gegenüber der Wickelrolle in Umfangsrichtung nachgezogen werden kann, um die beschränkte Länge der Längenmeßskala für die Änderungsmessungen voll ausnützen zu können. Damit wird eine einfache Justierung der Ablesemarke gegenüber der Längenmeßskala möglich.

Die Klemmeinrichtung kann unterschiedlich aufgebaut sein, besonders einfache Konstruktionsverhältnisse ergeben sich jedoch, wenn sie aus einem zwischen sich und der Wickelrolle einen Klemmspalt bildenden Klemmzylinder besteht, weil über diesen Klemmzylinder das Meßband gleichmäßig über die Bandbreite geklemmt werden kann. Zur Klemmung des Meßbandes kann der Klemmzylinder mit Hilfe einer Klemmschraube gegen den Rollenmantel gedrückt werden. Es ist aber auch eine Exzenterklemmung möglich, die eine sich mit dem Bandzug verstärkende Klemmkraft mit sich bringt.

Da die Klemmeinrichtung das Festklemmen des Klemmbandes mit verschiedenen Einzugslängen erlaubt, ist eine Verdrehung der Wickelrolle lediglich um einen der Winkelerstreckung der Längenmeßskala entsprechenden Winkel sinnvoll, der durch Anschläge gegenüber der Lagerkonsole begrenzt werden kann. Damit die Meßskalenlänge innerhalb der Drehanschläge für die Wickelrolle vorteilhaft ausgenützt werden kann, muß unter Umständen nach jeder Messung die Meßeinrichtung durch eine Anpassung der Einzugslänge des Meßbandes in die Klemmeinrichtung justiert werden.

Zur Drehmomentbelastung der Wickelrolle könnte ein Gewichtsmoment aufgebracht werden. Einfachere Konstruktionsbedingungen erhält man allerdings durch den Einsatz einer zwischen der Lagerkonsole und der Wickelrolle vorgesehenen Zugfeder, deren Federweg aufgrund des Federverlaufes entlang einer Sehne zur Wickelrolle erheblich kleiner als der Verzugsweg des auf der Wickelrolle festgeklemmten Meßbandendes sein kann, was eine Vergleichmäßigung der Zugbelastung des Meßbandes mit sich bringt.

Sind im Vergleich zur Länge der Meßstrecke große Längenänderungen zu erwarten, so kann das Meßband aus miteinander über Einhängekupplungen zugefest verbindbaren Teilstücken bestehen, die eine an die Längenänderung angepaßte Verlängerung bzw. Kürzung des Meßbandes erlauben. Damit können sonst notwendige Überlängen des Meßbandes vermieden werden.

Wie bereits ausgeführt wurde, ist es mit Hilfe einer erfindungsgemäßen Meßvorrichtung möglich, sowohl Änderungen der Umfangslänge eines Meßkörpers als auch des Abstandes zweier Meßstellen voneinander zu erfassen. Während bei der Erfassung der Abstandsänderung zweier Meßstellen das freie Ende des Meßbandes verschiebefest mit der einen Meßstelle verbunden werden muß, genügt es bei der Erfassung der Änderung von Umfangslängen lediglich die Lagerkonsole verschiebefest mit dem Meßkörper zu verbinden, weil in diesem Fall das freie Ende des Meßbandes an der Lagerkonsole angreifen kann.

In der Zeichnung ist der Erfindungsgegenstand beispielsweise dargestellt. Es zeigen
- Fig. 1: eine erfindungsgemäße Vorrichtung zum Messen der Änderungen einer Umfangslänge in einer vereinfachten Ansicht in Richtung der Wickelrollenachse,
- Fig. 2: eine der Fig. 1 entsprechende Darstellung einer Vorrichtung zum Messen der Abstandsänderung zwischen zwei Meßstellen,

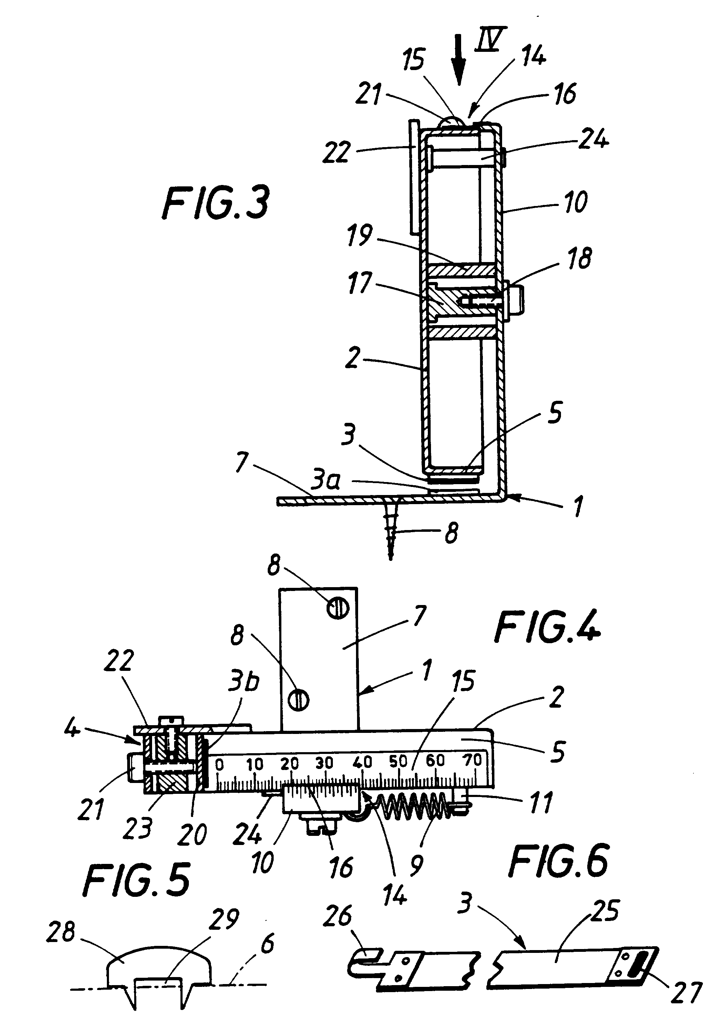

- Fig. 3: einen Schnitt nach der Linie III-III der Fig. 1,
- Fig. 4: eine zum Teil aufgerissene Ansicht der Vorrichtung in Richtung des Pfeiles IV der Fig. 3,
- Fig. 5: eine entlang der Meßstrecke vorzusehende Bandführung in einer schematischen Ansicht und
- Fig. 6: ein Schaubild eines Teilstückes des Meßbandes.

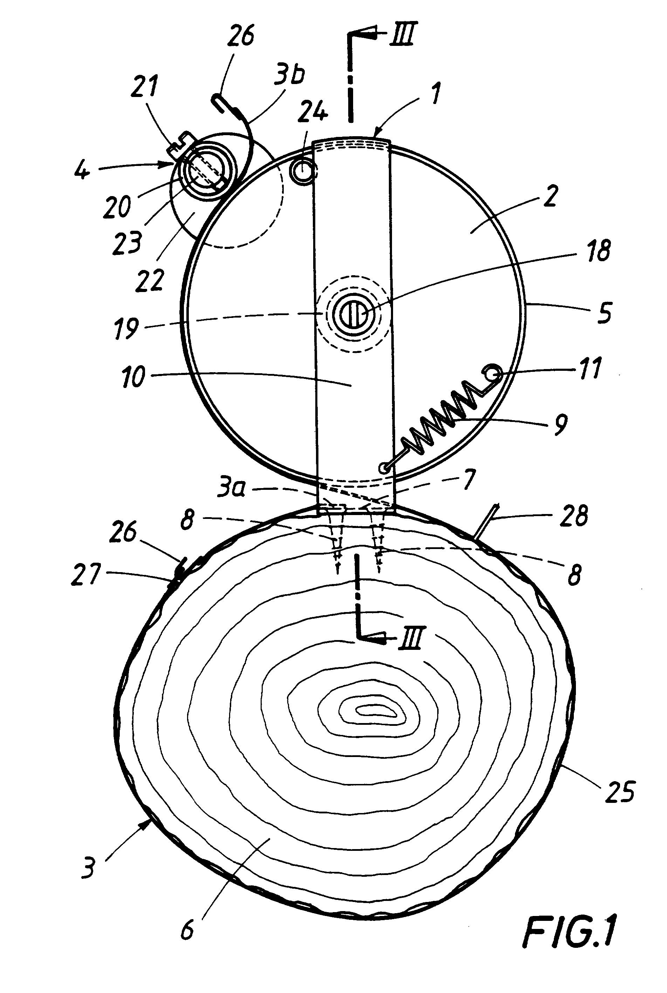

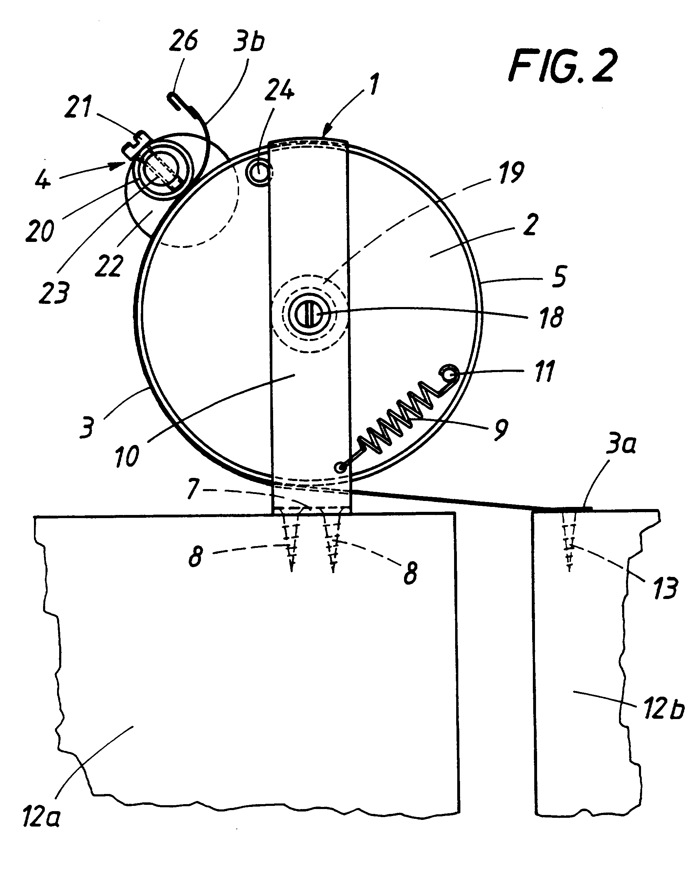

Wie die dargestellten Ausführungsbeispiele zeigen, besteht die erfindungsgemäße Meßvorrichtung jeweils aus einer in einer Lagerkonsole 1 drehbar gelagerten Wickelrolle 2 und einem Meßband 3, das über eine Klemmeinrichtung 4 auf dem Rollenmantel 5 festgeklemmt werden kann. Während gemäß der Fig. 1 das Meßband um den Umfang eines Baumstammes 6 gelegt ist, um Zuwächse bzw. Schrumpfvorgänge zu erfassen, wird die Meßvorrichtung gemäß der Fig. 2 zur Abstandsänderung zweier Meßstellen, beispielsweise zur Bestimmung von Setzungs-, Verschiebungs- oder Klüftungsbewegungen bei Bauwerken eingesetzt. Dementsprechend wird gemäß der Fig. 1 die aus einem Lagerwinkel gebildete Lagerkonsole 1 mit dem Befestigungsflansch 7 auf dem zu überwachenden Baumstamm 6 z. B. mit Hilfe von Befestigungsschrauben 8 verschiebefest angeordnet und das Meßband 3 nach einer Befestigung seines einen Endes 3a an der Lagerkonsole 1 um den Baumstamm 6 gelegt und im Bereich seines anderen Endes 3b über die Klemmeinrichtung 4 gegenüber der Wickelrolle 2 festgeklemmt. Da die Wickelrolle 2 durch eine Zugfeder 9, die einerseits in den Lagerschenkel 10 der Lagerkonsole 1 eingehängt ist und anderseits an einem Anschlagbolzen 11 der Wickelrolle 2 angreift, im Aufwickelsinn des Meßbandes 3 durch ein Drehmoment belastet wird, ergibt sich auf das Meßband 3 eine Zugspannung, die ein gleichmäßiges Anliegen des Meßbandes 3 am Baumstamm 6 sicherstellt.

Zur Bestimmung der Längenänderung einer Meßstrecke zwischen zwei Bauwerkabschnitten 12a und 12b werden nach der Fig. 2 die Lagerkonsole 1 mit dem Wickelrad 2 auf dem einen Bauwerkabschnitt 12a und das Meßbandende 3a auf dem anderen Bauwerkabschnitt 12b, beispielsweise mit einem Dübel 13 befestigt. Die Änderung der Meßstrecke läßt sich unabhängig davon, ob Umfangsänderungen gemäß der Fig. 1 oder Abstandsänderungen gemäß der Fig. 2 erfaßt werden sollen, an Hand einer Meßeinrichtung 14 ablesen, die insbesondere der Fig. 4 entnommen werden kann und aus einer Längenmeßskala 15 und einer Ablesemarke 16 in Form eines Nonius besteht, wobei gemäß dem Ausführungsbeispiel die Meßskala 15 der Wickelrolle 2 und die Ablesemarke 16 dem Lagerschenkel 10 der Lagerkonsole 1 zugeordnet sind. Längenänderungen der jeweiligen Meßstrecke können somit über die Drehung der Wickelrolle 5 mit Hilfe der Meßeinrichtung 14 erfaßt werden, wenn die Meßeinrichtung in den vorgesehenen Zeitabständen abgelesen wird.

Die Wickelrolle 2 kann dabei sehr einfach aus einer tellerartigen Scheibe mit hochgezogenen, den Rollenmantel 5 bildenden Rändern ausgebildet sein und mit Hilfe einer angenieteten Achse 17 auf dem Lagerschenkel 10 der Lagerkonsole 1 gelagert werden, die zur Halterung der Achse 17 von einer Schraube 18 durchsetzt wird. Um allenfalls auftretende Kippmomente aufzufangen, kann die tellerartige Scheibe der Wikkelrolle mit einem Stützring 19 versehen sein.

Die Klemmeinrichtung 4 kann zwar sehr unterschiedlich aufgebaut werden, doch ergeben sich besonders einfache Konstruktionsverhältnisse, wenn die Klemmeinrichtung 4 aus einem zwischen sich und der Wickelrolle 2 einen Klemmspalt bildenden Klemmzylinder 20 aufweist. Dieser Klemmzylinder 20 kann an die Wickelrolle 2 durch eine Klemmschraube 21 angedrückt werden, die ein über einen Halter 22 mit der Wickelrolle 2 verbundenes Mutterstück 23 schraubverstellbar durchsetzt. Da der hohle Klemmzylinder 20 das Mutterstück 23 umschließt und die Klemmschraube 21 den Klemmzylinder 20 auf der von der Wickelrolle 2 abgewandten Seite durchsetzt, drückt die Klemmschraube 21 bei ihrem Anziehen gegen die Innenseite des hohlen Klemmzylinders 20, zwischen dem und dem Rollenmantel 5 somit das eingefädelte Ende 3b des Meßbandes festgeklemmt werden kann. Durch ein Lösen dieser Klemmeinrichtung 4 kann die Wickelrolle 2 gegenüber dem Bandende 3b verdreht werden, um die Meßskala 15 gegenüber der Ablesemarke 16 justieren zu können. Damit können stets vorteilhafte Ablesebedingungen für die Meßeinrichtung 14 sichergestellt werden, und zwar unabhängig von dem Ausmaß der Längenänderungen der Meßstrecke. Dieser Umstand beschränkt den erforderlichen Drehwinkel der Wickelrolle 2 im wesentlichen auf die Bogenlänge der Meßskala 15, so daß dieser Drehwinkel durch Anschläge vorgegeben werden kann. Gemäß den dargestellten Ausführungsbeispielen wird als einer der beiden Anschläge der Anschlagbolzen 11 für den Angriff der Zugfeder 9 verwendet, während der andere Anschlag durch einen Bolzen 24 gebildet wird.

Das Meßband 3 kann aus einzelnen Teilstücken 25 zusammengesetzt sein, die endseitig einerseits einen Einhängehaken 26 und anderseits eine Einhängeöse 27 zur zugfesten Kupplung der aneinandergereihten Teilstücke 25 aufweisen. Damit können sonst notwendige Überlängen des Meßbandes 3 vermieden werden, wenn über längere Zeitspannen mit großen Längenänderungen der Meßstrecke gerechnet werden muß, weil bei Bedarf ein Teilstück 25 dem Meßband 3 hinzugefügt oder vom Meßband abgenommen werden kann. Außerdem ist es für Meßvorrichtungen zur Bestimmung der Zuwächse bzw. Schrumpfungen von Baumstammquerschnitten möglich, an der Lagerkonsole 1 ein Meßbandende 3a unverlierbar anzuordnen, in das dann die erforderlichen Teilstücke 25 des Meßbandes eingehängt werden können.

Damit die Handhabung der Meßvorrichtung beim Verlegen des Meßbandes erleichtert und eine genaue Lage des Meßbandes gesichert wird, können Bandführungen 28 zum Einsatz kommen, die das Meßband 3 umschließen und in den Baumstamm 6 eingeschlagen werden, wobei sich zwischen der Bandführung 28 und dem Baumstamm 6 ein Führungsschlitz 29 für das Meßband 3 ergibt.

## Patentansprüche

1. Vorrichtung zum Messen von zeitlichen Längenänderungen über längere Beobachtungszeitraüme einer entlang eines Meßobjektes (6, bzw. 12a und 12b) verlaufenden Meßstrecke, an deren einem Ende ein Meßband (3) verschiebefest befestigt ist und deren anderes Ende eine mit dem Meßband (3) verbundene Meßeinrichtung (14) mit einer Längenmeßskala (15) und einer Ablesemarke (16) gegebenenfalls in Form eines Nonius aufweist, dadurch gekennzeichnet, daß die Meßeinrichtung (14) aus einer im Aufwickelsinn mit einem Drehmoment beaufschlagten Wickelrolle (2) für das am Meßobjekt (6, bzw. 12a und 12b) verschiebefest befestigte Meßband (3) und aus einer am Meßstreckenende unverschiebbar mit dem Meßobjekt (6, bzw. 12a und 12b) verbundenen Lagerkonsole (1) für die Wickelrolle (2) besteht, wobei die Längenmeßskala (15) und die Ablesemarke (16) einerseits auf der Wickelrolle (2) und anderseits auf der Lagerkonsole (1) vorgesehen sind.

2. Vorrichtung nach Anspruch 1, dadurch gekennzeichnet, daß die Wickelrolle (2) eine das Meßband (3) an den Rollenmantel (5) andrückende Klemmeinrichtung (4) trägt, die aus einem zwischen sich und der Wickelrolle (2) einen Klemmspalt bildenden Klemmzylinder (20) besteht.

3. Vorrichtung nach Anspruch 1 oder 2, dadurch gekennzeichnet, daß die Wickelrolle (2) anschlagbegrenzt gegenüber der Lagerkonsole (1) verdrehbar gelagert ist.

4. Vorrichtung nach einem der Ansprüche 1 bis 3, dadurch gekennzeichnet, daß zwischen der Lagerkonsole (1) und der Wickelrolle (2) eine die Drehmomentbelastung der Wickelrolle (2) bedingende Zugfeder (9) vorgesehen ist.

5. Vorrichtung nach einem der Ansprüche 1 bis 4, dadurch gekennzeichnet, daß das Meßband (3) aus miteinander über Einhängekupplungen zugfest verbindbaren Teilstücken (24) besteht.

6. Vorrichtung nach einem der Ansprüche 1 bis 5, dadurch gekennzeichnet, daß bei einer durch den Umfang eines Meßkörpers gebildeten Meßstrecke das den Meßkörper entlang eines Umfanges umschließende Meßband (39)mit einem Ende an der Lagerkonsole (1) und mit seinem anderen Ende an der Wickelrolle (2) befestigt ist.

## Claims

1. A device for measuring changes over prolonged periods of time in the length of a measured zone extending along an object (6, or 12a and 12b) under measurement, one end of the measured zone being non-displaceably secured to a measuring tape (3) and the other end comprising a measuring device (14) connected to the tape (3) and provided with a length-measuring scale (15) and an index mark (16) optionally in the form of a vernier, characterised in that the measuring device (14) comprises a roller for winding the measuring tape (3) non-displaceably secured to the measured object (6 or 12a and 12b) and subject to a torque in the winding-up direction, and also comprises a bracket (1) for the roller (2), such bracket being non-displaceably connected to the measured object (6, or 12a and 12b) at the end of the measured zone, the length-measuring scale (15) and the index mark (16) being provided on the one hand on the roller (2) and on the other hand on the bracket (1).

2. A device according to claim 1, characterised in that the roller (2) bears a clamping device (4) which presses the tape (3) against the surface (5) of the roller and which comprises a clamping cylinder (20) forming a clamping nip between itself and the roller (2).

3. A device according to claim 1 or 2, characterised in that the roller (2) is mounted so as to be rotatable relatively to the bracket (1) to an extent limited by stop means.

4. A device according to any of claims 1 to 3, characterised in that a tension spring (9) determining the torque on the roller (2) is provided between the roller (2) and the bracket (1).

5. A device according to any of claims 1 to 4, characterised in that the measuring tape (3) comprises a number of parts (24) interconnected in tensionresistant manner via hook-in coupling means.

6. A device according to any of claims 1 to 5, characterised in that in the case of a measured zone formed by the periphery of a member for measurement, the measuring tape (39) extending round a periphery of the measured member is secured at one end to the bracket (1) and at the other end to the roller (2).

## Revendications

1. Dispositif pour mesurer des modifications de longueurs sur la valeur d'intervalles de temps d'observation longs, le d'une distance de mesure, courant le long d'un objet à mesurer (6, respectivement 12a et 12b) à une extrémité de laquelle une bande de mesure (3) est fixée d'une façon empêchant tout déplacement et dont l'autre extrémité présente un dispositif de mesure (14) relié à la bande de mesure (3), avec une échelle de mesure de longueur (15) et une marque de lecture (16) se présentant, le cas échéant, sous la forme d'un vernier, caractérisé en ce que le dispositif de mesure (14) est constitué d'un rouleau d'enroulement (2), sollicité dans le sens de l'enroulement par un couple de rotation, pour la bande de mesure (3) fixée, de façon empêchant tout déplacement, sur l'objet à mesurer (6 respectivement 12a et 12b) et constitué d'une console de palier reliée de façon indéplaçable à l'extrémité de l'existence de mesure, avec l'objet à mesurer (6, respectivement 12a et 12b), la console étant destinée à la bobine d'enroulement (2), l'échelle de mesure de longueur (15) et la marque de lecture (16), d'une part, étant prévues sur le rouleau d'enroulement (2) et, d'autre part, sur la console de palier (1).

2. Dispositif selon la revendication 1, caractérisé en ce que le rouleau d'enroulement (2) porte un dispositif de serrage (4), pressant la bande de mesure (3) sur l'enveloppe de rouleau (5) et constitué d'un cylindre de serrage (20) constituant un interstice de serrage entre lui et le rouleau d'enroulement (2).

3. Dispositif selon la revendication 1 ou 2, caractérisé en ce que le roulement d'enroulement (2) est monté en rotation avec une limitation par butée par rapport à la console de palier (1).

4. Dispositif selon l'une des revendications 1 à 3, caractérisé en ce qu'entre la console de palier (1) et le rouleau d'enroulement (2) est prévu un ressort de traction (9), conditionnant la sollicitation du rouleau d'enroulement (2) par un couple de rotation.

5. Dispositif selon l'une des revendications 1 à 4, caractérisé en ce que la bande de mesure (3) est constituée d'éléments partiels (24), susceptibles d'être reliés ensemble d'une façon résistant à la traction, par l'intermédiaire d'accouplements d'accrochage.

6. Dispositif selon l'une des revendications 1 à 5, caractérisé en ce que, dans le cas où la distance de mesure est constituée par la périphérie d'un corps à mesurer, la bande de mesure (39) qui enclôt le corps à mesurer le long d'une périphérie est fixée à une première extrémité sur la console de palier (1) et à son autre extrémité sur le rouleau de roulement (2).
